# EUROPEAN PATENT SPECIFICATION

(11) **EP 2 273 508 B1**
(45) Date of publication and mention of the grant of the patent: **11.12.2013**
(21) Application number: 09008856.8
(22) Date of filing: 07.07.2009
(51) Int. Cl.: G21C 21/02, B65G 47/28

(54) **Isolating plant and associated isolating method**
Isolieranlage und zugehöriges Isolierverfahren
Installation d'isolation et procédé d'isolation associé

(43) Date of publication of application: 12.01.2011
(73) Proprietor: AREVA GmbH, 91052 Erlangen (DE)
(72) Inventor: Janning, Hermann, 49809 Lingen (DE)
(74) Representative: Tergau & Walkenhorst

(56) References cited:
- WO-A-2007/045625
- DE-A1- 4 222 972
- JP-A- 58 069 614
- JP-A- 60 122 620

## Description

The invention relates to an isolating plant for isolating nuclear fuel pellets, fed in stacks. It also relates to an associated method.

The nuclear fuel necessary for operating a nuclear plant is usually provided in the form of so-called pellets or tablets of substantially cylindrical shape. Before such fuel pellets, consisting, for example, of enriched uranium oxide or another fissionable material, are inserted into a fuel-rod cladding tube provided for being arranged in a reactor core, the individual pellets are usually thoroughly inspected. For this purpose, the fuel pellets are preferably fed to an inspection line of an automated inspection device. Fuel pellets whose dimensions, quality or other physical properties do not fulfil the specified requirements will be treated as rejects and will be sorted out.

Usually, the fuel pellets are fed to the inspection device in groups in the form of coherent columns or stacks and have to be isolated before entering the inspection line. This is effected, for example, by means of an isolating plant known from DE 42 13 180 A1, which comprises two synchronously circulating conveyor belts oriented towards each other in the shape of a vee (V), on which the fuel pellets to be isolated are fed in stacks to an isolating zone. There, above the two feeding conveyor belts, there is a deflection pulley of a third conveyor belt installed in "suspended" arrangement and provided with pushing pins protruding outwards.

With suitable coordination of the circulating speeds of the two feeding conveyor belts arranged in the shape of a vee and the circulating speed of the output conveyor belt provided with the pushing pins and arranged above them, the pushing pins, while circulating around the deflection pulley, move between the individual pellets of the fed stack and thus bring about the desired separation. Then, the isolated pellets, guided on sliding rails, are further conveyed by means of the pushing pins of the output conveyor belt and fed, for example, to an inspection line. The pushing pins located between the individual pellets prevent at the same time that the pellets approach each other again in an undesired manner.

Other separating devices are known from JP 58-069614 and JP 60-122620.

The known isolating plant has a number of disadvantages: The proper delivery and isolation of the fuel pellets requires an extremely precise coordination of the circulating speeds of the conveyor belts involved, with intermediate acceleration phases and braking processes. For this purpose, the instantaneous positions of the pellets and the pushing pins have to be detected with relatively high precision and processed in real time in a control unit with complex control logics, in particular in case of a varying dimensioning of the pellets. The selection of the drive motors for the conveyor belts must also be effected relatively accurately and quickly, which entails a considerable amount of work. Nevertheless, errors occur again and again in the isolation, which In the worst case may lead to a standstill of the installation and will then make a manual intervention necessary.

Relatively frequently, so-called double isolations occur, i.e. instead of a single fuel pellet, two fuel pellets at a time are placed in a section between two successive pushing pins. In the following inspection, these pellets are rejected as scrap, and for each rejected unit, all necessary production steps have to be passed again, which causes the corresponding work and expenses.

The above-mentioned problems will occur to a particularly high extent, if different pellet types with different masses and dimensions and, therefore, friction and gliding properties of different degrees shall be processed in the same plant.

It is, therefore, a task of the present invention to provide an isolating plant of the above-mentioned type as well as an associated method, with which a particularly reliable and interruption-free isolation of nuclear fuel pellets fed in groups is possible with, at the same time, a high processing speed.

Concerning the plant, the task is solved, according to the invention, in that a pressure-gas-driven separating device is arranged in a delivery area located between the feeding device and the output device, in which the fed nuclear fuel pellets are separated from each other during operation of the plant by pressure-gas pulses in order to be delivered one by one to the output device.

Both the feeding device and the output device may comprise a conveyor belt each.

The separation of the nuclear fuel pellets and their delivery from one conveyor belt to the other is, therefore, effected purely pneumatically, i.e. without direct mechanical interaction. It turned out surprisingly that particular when charging the separating device with pressure-gas pulses of a relatively short duration, a particularly reliable isolation can be achieved without excessive flow turbulences or swirls occurring. In this way, it is avoided, when processing nuclear fuel pellets, that radioactively loaded dust is detached from the pellet surface and whirled up and then carried into the surrounding atmosphere.

In an embodiment, the separating device is connected to a pressure-gas source through a pressure-gas line, a valve synchronized through synchronization means with the movement of the nuclear fuel pellets on the feeding conveyor belt being arranged in the pressure-gas line.

Advantageously, the pressure-gas is compressed air, which is brought to the necessary operating pressure by means of a compressor. If necessary, an intermediate storing of the compressed air in a compressed-air accumulator or tank can be provided. Alternatively, however, other pressurized gases can also be used, unless they chemically react in an undesired manner with the objects to be isolated.

In the embodiment, the separating device comprises a conveying tube, through which the nuclear fuel pellets to be isolated are passed during operation of the plant and which includes a number of pressure-gas distribution slots formed into the tube wall and connected to the pressure-gas line. Expediently, shape and dimension of the inner cross-section of the conveying tube are adapted to the nuclear fuel pellets to be isolated such that the latter can, on the one hand, slide through the conveying tube without considerable frictional resistance, but such that, on the other hand, no considerable gap remains between the outside of each nuclear fuel pellet and the inner wall of the conveying tube. That means that the nuclear fuel pellets to be isolated substantially seal the conveying tube in a gas-tight manner. A pressure gas cushion, applied through the pressure-gas distribution slots, accelerates each of the nuclear fuel pellets, like a projectile in a rifle barrel, and catapults it out of the conveying tube

Advantageously, the pressure-gas distribution slots are arranged in an end zone of the conveying tube, said end zone facing the output conveyor belt. Expediently, they are arranged and dimensioned such that the applied pressure-gas pulses always accelerate, in conveying direction, only the frontmost nuclear fuel pellet, in conveying direction, of a fed stack, thus separating it from the stack.

According to the invention, the valve arranged in the pressure-gas line is a high-speed solenoid valve, with which pressure-gas pulses of a duration in the range between 1 ms and 50 ms can be realized. As mentioned before, it is in this way possible already with a relatively low gas pressure of, for example, 0.4 bar or a little more, to achieve a reliable separation of the respective frontmost nuclear fuel pellet from the rest of the stack, without a risk of contaminating the pressure-gas or the ambient air with radioactive dust or the like.

As the remaining stack has a relatively large mass in comparison with the individual nuclear fuel pellets and is, furthermore, continuously pushed into the conveying tube with a certain force, any recoil effects on the inserted stack can be neglected.

In an advantageous embodiment, the synchronization means comprise a light barrier, whose light path is interrupted by the nuclear fuel pellets fed to the conveying tube or located therein, as soon as they reach or pass the corresponding position. This triggers an electrical signal, which is converted, in an associated control unit, into an opening signal for opening the valve arranged in the pressure-gas line, in order to initiate in this way the desired pressure pulse in the separating device. In an advantageous development, the opening signal is delayed, as required, and passed on to the valve only after the position of the pushing pins on the output conveyor belt have been detected as being correct. Preferably, the light barrier is arranged in the end zone of the conveying tube facing the output conveyor belt and preferably, viewed in conveying direction, shortly behind the pressure-gas distribution slots, so that the corresponding nuclear fuel pellet interrupts the light barrier shortly before exiting from the conveying tube. It must then be transported by the pressure pulse triggered in this way over a relatively short distance only within the conveying tube up to its complete ejection.

As already stated above, it can be provided in a preferred development that the control or regulating algorithm for the valve control, implemented in the control unit, also takes into account the instantaneous position of the pushing pins fixed on the output conveyor belt. For this purpose, the synchronization means advantageously include a position detector, e.g. a second light barrier, detecting the instantaneous position of the pushing pins.

Concerning the method, the above-mentioned task is solved by pushing a stack of nuclear fuel pellets according to the subject-matter of independent method claim 8.

In this connection, it is particularly advantageous, if the fed stack is continuously pushed into the conveying tube and if the pressure-gas pulses are applied at least approximately at periodic time intervals, so that a quasi-continuous isolation of the nuclear fuel pellets is effected. However, in general, no exact periodicity is given. Rather does the control unit of the circulating speed of the feeding conveyor belt and the opening of the high-speed valve by means of sensors for detecting the position of the fuel pellets and the pushing pins make sure to avoid, on the one hand, double separations and on the other hand, also so-called zero separations, in which spacings between the pushing pins remain empty, for lack of fuel pellets, which are not "supplied" quickly enough.

The advantages achieved with the invention consist in particular in that in an isolating plant, by purposefully charging nuclear fuel pellets fed In stacks, in particular nuclear fuel pellets for a nuclear plant, with pressure-gas pulses, a reliable and interruption-free isolation of each stack can be achieved, without requiring any mechanical interaction with any grippers, catches or handling instruments. Through a suitably chosen geometry of the pressure-gas feeding device and with a simple timing of the pressure pulses, the risk of zero or double separations can be excluded almost completely, even with a high conveying speed and a correspondingly high throughput. The linear course of motion without discrete changes in direction prevents an undesired change in orientation of the objects, for example from a lying into an upright orientation (in relation to the respective conveyor belt). By applying relatively short pressure pulses with little overpressure above the ambient atmosphere, a contamination of the ambient atmosphere with contaminants detached from the respective object or radioactive activities is avoided. In addition, the isolation process is extremely gentle to the material, which is an advantage in particular when handling relatively sensitive fuel pellets from compressed nuclear fuel.

An exemplary embodiment of the invention is explained in detail by means of a drawing, in which
- FIG. 1: is a very schematic side view of an isolating plant for nuclear fuel pellets,
- FIG. 2: shows the isolating plant according to FIG. 1 in a somewhat more detailed and more graphical perspective top view from an angle,
- FIG. 3: shows a detail of FIG. 2, namely a pneumatic separating device, and
- FIG. 4: shows a detail of FIG. 3, namely a conveying tube for fuel pellets, shown here, contrary to FIG. 3, without the enclosing housing.

Identical parts are identified in all figures by the same reference numbers.

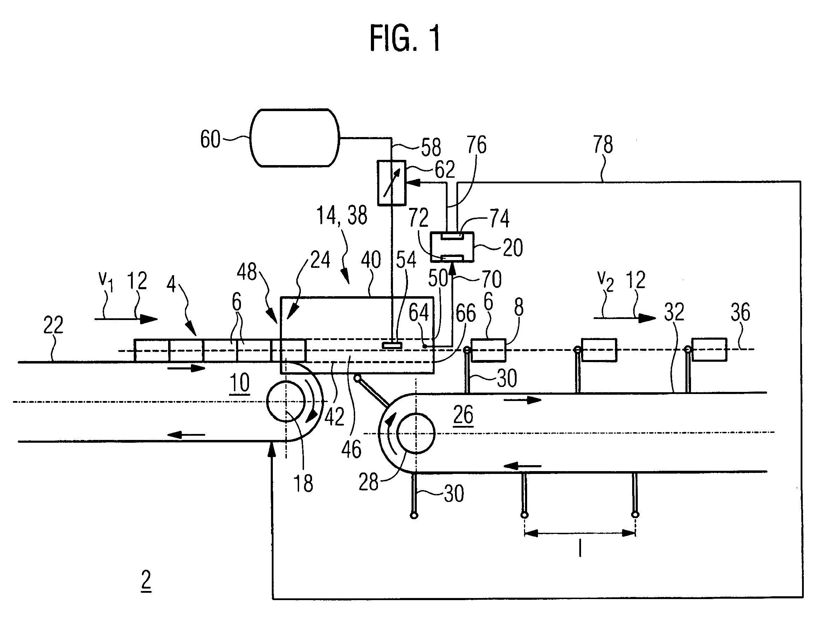

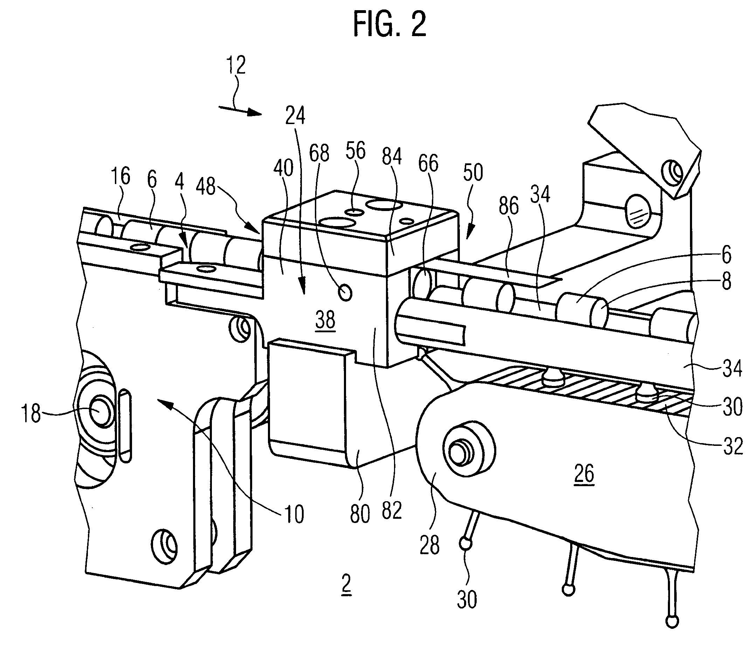

The isolating plant 2 represented in FIG. 1 and FIG. 2 serves for isolating fuel pellets 6 made of compressed nuclear fuel, e.g. uranium dioxide, fed in groups in the form of coherent columns or stacks 4. Each of the individual fuel pellets 6 has a substantially cylindrical shape (mean diameter e.g. 9 mm, length e.g. 11 mm), so that stacks 4 can be formed thereof, in which several fuel pellets 6 are lined up along their axis of symmetry one behind the other, with their end faces 8 adjoining each other.

In the isolating plant 2 according to FIG. 1 and FIG. 2, such a stack 4 is fed on a circulating feeding conveyor belt 10, in lying position, in conveying direction 12, to the isolating zone 14 properly speaking, lateral guide rails 16 preventing the respective stack 4 from rolling away to the side. The feeding conveyor belt 10 is guided over at least two deflection pulleys, only one of which can be seen, however, in FIG. 1 and FIG. 2 (reference number 18). At least one of the deflection pulleys is connected with a drive unit and thus serves as a driving roller. By means of the control unit 20, which will be described in more detail in the following, variable conveying speeds can be adjusted, varying typically around an average value of v₁ = 100 mm/s. With this, a throughput rate of about ten fuel pellets 6 per second, fed to the isolating zone 14, can be achieved. The fuel pellets 6 are lying directly on the conveying surface 22 of the feeding conveyor belt 10 and are carried along by static friction.

The separation properly speaking of the fuel pellets 6 fed in stacks is effected in the separating device 24, which is shown in FIG. 1 in a schematic manner only and which will be described in more detail in the following. Afterwards, the fuel pellets 6 separated from each other will be taken away by means of an output conveyor belt 26. The output conveyor belt 26 is designed, like the feeding conveyor belt 10, as a conveyor belt guided over at least two deflection pulleys and driven by a driving device not shown in detail (here, only one deflection pulley 28 can be seen). A constant conveying speed of, for example, v₂ = 300 mm/s is provided, which is thus about three times higher than the typical conveying speed of the feeding conveyor belt 10.

Contrary to the feeding conveyor belt 10, the output conveyor belt 26 includes pushing pins 30, fitted on the circulating belt at regular spacings. The pushing pins 30 are fitted on the belt such that they always project vertically from the (outer) belt surface - even in the area of the deflection pulley 28. The (constant) distance between two successive pushing pins is, for example, I = 15 mm or I = 30 mm. Contrary to the feeding conveyor belt 10, the fuel pellets 6 have no direct contact with the belt surface 32 while being conveyed by the output conveyor belt 26. Rather do they rest on two, for example, cylindrical sliding rails 34 arranged above the output conveyor belt 26 and aligned parallelly to the latter. The two sliding rails 34 are parallel to each other and spaced apart just so far that, on the one hand, the fuel pellets 6 already isolated, sliding on them in lying position, do not fall through the clearance and that, on the other hand, the pushing pins 30 project unhindered through the clearance between the sliding rails 34, in order to push the fuel pellets 6. Thanks to their shape, the sliding rails 34 also offer a lateral support.

The arrangement and alignment of feeding conveyor belt 10, separating device 24, output conveyor belt 26, and sliding rails 34 is chosen such that the fuel pellets 6 move during operation of the plant along a straight, horizontal trajectory 36 in conveying direction 12. That means that the feeding conveyor belt 10 and the output conveyor belt 26 are arranged in a common longitudinal direction one behind the other and aligned in the same manner. Because of the guidance of the fuel pellets 6 on the sliding rails 34, provided on the output side of the separating device 24, the output conveyor belt 26 is located a little deeper than the feeding conveyor belt 10.

Between the two conveyor belts 10 and 26, i.e. more precisely, between the end zones with the deflection pulleys 18 and 28, facing each other, there is a space also called hereinafter isolating zone 14 or delivery area 38, where the separating device 24 is arranged. During operation of the plant, the feeding conveyor belt 10 transports lying stacks 4 of fuel pellets 6 into the separating device 24 arranged in the delivery area 38. In the separating device 24, the stack 4 is successively separated. The isolated fuel pellets 6 are then ejected by the separating device 24 on the other side and delivered one by one to the output conveyor belt 26, whereby the pushing pins 30 running around the deflection pulley 28 project from below into the spacings previously generated between the fuel pellets 6 sliding on the sliding rails 34 and push them ahead in conveying direction 12. This prevents at the same time that the isolated fuel pellets 6 approach each other again in an undesired manner.

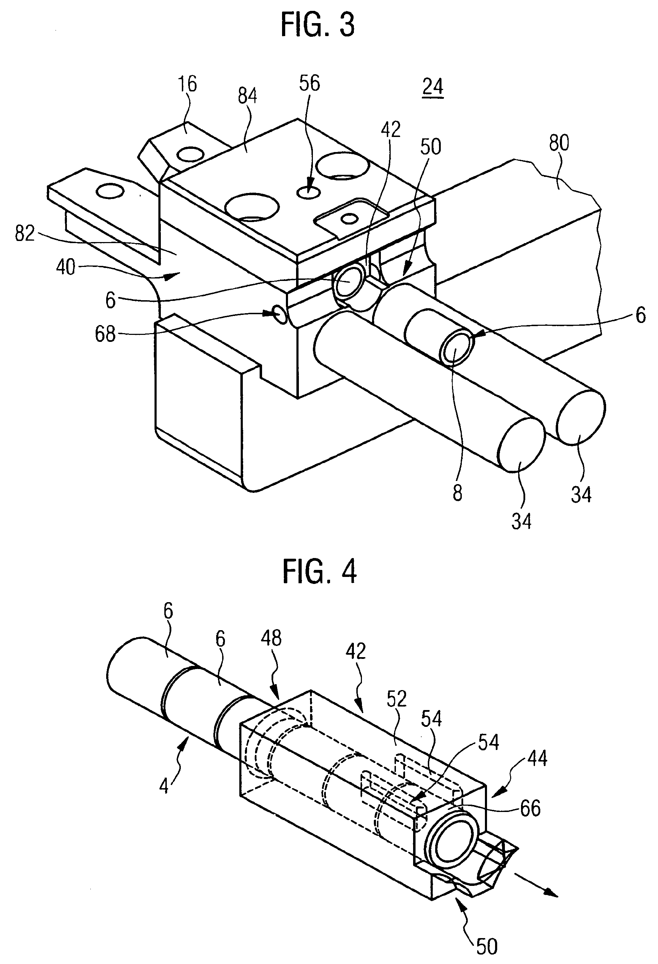

For a particularly reliable and interruption-free separation of the fuel pellets 6, even at high throughput rates, the separating device 24 shown at an enlarged scale in FIG. 3 is based on a pneumatic action principle. A central element of the separating device 24 is the conveying tube 42 shown in FIG. 4 isolated - without the surrounding housing block 40 -, which in its mounting position is oriented parallelly to the conveying direction 12. The conveying tube 42 includes inside an oblong parallelepiped 44 made of hardened steel or engineering ceramic a cylindrical passage 46, through which the fuel pellets 6 fed by the feeding conveyor belt 10 during operation of the plant are pushed. The diameter of the passage 46 is slightly larger than the diameter of the fuel pellets 6, so that these can be pushed through almost without friction and without risk of "getting stuck", but that, nevertheless, when the fuel pellet 6 is inserted, a largely gas-tight closure or sealing of the passage 46 is achieved. On the inlet side 48, the passage 46 may be expanded in the manner of a funnel to guarantee an easy, self-centering insertion of the fuel pellets 6. The length of the conveying tube 42 is such that it is able to receive at least two fuel pellets 6, in the present exemplary embodiment, even three fuel pellets 6.

The conveying tube 42 according to FIG. 4 includes in an end zone facing the outlet side 50 a number of advantageously slot-shaped pressure-gas distribution openings or pressure-gas distribution slots 54 formed into the tube wall 52, which can be charged with a pressurized gas through a pressure-gas line integrated in the housing block 40. In FIG. 3, only the connecting piece 56 of the line section, which is integrated in the housing block 40 and includes, if necessary, a number of branchings to the pressure-gas distribution slots 54, is visible. In the isolating plant according to FIG. 1 and FIG. 2, an external pressure-gas line 58 (only shown in FIG. 1) is connected to the connecting piece 56, said pressure-gas line 58 being in turn in connection with a pressure-gas reservoir 60, in the present exemplary embodiment with a compressed-air reservoir. In the pressure-gas reservoir 60, a gas, in the present case compressed air, pressurized with, for example, 0.5 bar, is stored. For this purpose, ambient air is sucked in, compressed by a compressor, which is not shown here, and fed into the pressure-gas reservoir 60 for intermediate storage.

To control the pressure-gas flow from the pressure-gas reservoir 60 to the pressure-gas distribution slots 54, a valve 62 actuated by a solenoid and designed as a high-pressure solenoid valve, is inserted in the pressure-gas line 58 situated therebetween. Upon suitable selection, the otherwise completely closed valve 62 momentarily unblocks the flow passage, so that the pressure-gas distribution slots 54 and thus the fuel pellets 6 guided inside the conveying tube 42 are charged with a short pressure pulse. With suitable arrangement and dimensioning of the pressure-gas distribution slots 54 and a suitably chosen timing (moment of charging and duration) as well as pressure of the pressure pulses, this effects an acceleration of the fuel pellets 6, which in comparison with the remaining stack are relatively lightweight and freely movable in conveying direction 12, at the front, output-side end of the conveying tube 42 in conveying direction 12, i.e. towards the output conveyor belt 26.

That means that the fuel pellet 6 located at the end of the stack 4 in the conveying tube 42 is catapulted, so to speak, through the tendency to expand of the pressure-gas penetrating through the pressure-gas distribution slots 54 into the conveying tube 42, out of the conveying tube 42 and onto the sliding rails 34 and, thus, placed between the pushing pins 30 of the output conveyor belt 26 circulating at a higher speed than the feeding conveyor belt 10. In this manner, the desired isolation one fuel pellet 6 each between two successive pushing pins 30 is effected. As the stack 4 is continuously pushed forward on the feeding conveyor belt and the output conveyor belt 26, too, circulates continuously, the overall isolation process is effected, in spite of the discrete character of the individual pressure pulses, in a quasi-continuous manner.

The exact position and the dimensions of the pressure-gas distribution slots 54 may vary; it should expediently be made sure, however, that only the frontmost fuel pellet 6 of the stack 4, viewed in conveying direction 12, is accelerated.

A peripheral notch or chamfer in the respective fuel pellet 6 in the margin area of its front and/or rear end face 8, facilitates the initial penetration of the pressure-gas into a gap or clearance between the frontmost and the following fuel pellet 6. This assists the separation especially in its first phase.

To detect the current position of the fed fuel pellets 6, a light barrier 64 is provided in the isolating plant 2 according to FIG. 1 and FIG. 2. In the present exemplary embodiment, the light barrier 64 is arranged such that its light beam is interrupted, as soon as the front end face 8 of the frontmost fuel pellet 6 of the stack 4 pushed into the conveying tube 42, viewed in conveying direction 12, reaches the outlet opening 66 of the conveying tube 42. The exact positioning of the light beam can, however, if necessary, also be chosen differently. Light source (transmitter) and light sensor (receiver) of the light barrier 64 as well as, if necessary, a reflector, present in the case of reflex light barriers, are not drawn in FIG. 2 and FIG. 3, for the sake of simplicity. However, a cylindrical recess 68 in the housing block 40 is visible, through which the light beam of the light barrier 64 is guided.

As can be seen in the schematic representation according to FIG. 1, the sensor of the light barrier 64 is connected through a signal line 70 with the signal input 72 of an electronic control unit 20. The control unit 20 processes this input signal, possibly together with the input signals of further sensors, according to a previously fixed control algorithm and transmits through a control-signal line 76 connected to the signal output 74 suitable control signals to the actuating unit of the valve 62 arranged in the pressure-gas line 58. Further input signals, possibly taken into account for the selection of the valve 62, may come, for example, from sensors, not shown here, for position detection of the pushing pins 30 on the output conveyor belt 26. Furthermore, a control of the circulating speed v₁ of the feeding conveyor belt 10 and/or of the circulating speed v₂ of the output conveyor belt 26 by means of the above-mentioned, and possibly further, input quantities, can be provided. For this purpose, the control unit 20 acts upon the drive unit, not shown here in detail, of the respective conveyor belt 10, 26, through its signal output 74 and through a control-signal line 78 connected to the signal output 74.

As can be seen, e.g., in FIG. 3, the housing block of the separating device 24 supported by a support 80 expediently comprises a lower part 82 receiving the conveying tube 42 and an upper part 84 detachably connected with the lower part. When the upper part 84 is removed, the conveying tube 42 can easily be taken out of the lower part 82 and exchanged, as required, e.g. against a conveying tube 42 with another diameter of the passage 46, for example if fuel pellets 6 of other dimensions shall be processed.

As can be seen in FIG. 2, a steel sheet 86 or the like can be arranged on the outlet side 50 of the separating device 24, preventing that the fuel pellets 6 catapulted out of the conveying tube 42 are by error pushed out of the guide rails upwards through incorrectly positioned pushing pins 30.

The invention has been described above in connection with the manufacture and inspection of nuclear fuel pellets 6, it is, however, not restricted to this field of application. Rather are other application possibilities in other industrial production processes also imaginable, in which a reliable separation of preferably cylindrical objects fed in stacks is important. By adapting the passage 46 of the conveying tube 42 accordingly, it will be possible, if necessary, to isolate even objects with a non-cylindrical cross-section.

### Bezugszeichenliste

- 2: Isolating plant
- 4: Stack
- 6: Fuel pellet
- 8: End face
- 10: Feeding device (feeding conveyor belt)
- 12: Conveying direction
- 14: Isolating zone
- 16: Guide rail
- 18: Deflection pulley
- 20: Control unit
- 22: Conveying surface
- 24: Separating device
- 26: Output device (output conveyor belt)
- 28: Deflection pulley
- 30: Pushing pin
- 32: Belt surface
- 34: Sliding rail
- 36: Trajectory
- 38: Delivery area
- 40: Housing block
- 42: Conveying tube
- 44: Parallelepiped
- 46: Passage
- 48: Inlet side
- 50: Outlet side
- 52: Tube wall
- 54: Pressure-gas distribution slot
- 56: Connecting piece
- 58: Pressure-gas line
- 60: Pressure-gas reservoir
- 62: Valve
- 64: Light barrier
- 66: Outlet opening
- 68: Recess
- 70: Signal line
- 72: Signal input
- 74: Signal output
- 76: Control-signal line
- 78: Control-signal line
- 80: Support
- 82: Lower part
- 84: Upper part
- 86: Steel sheet

- v₁: Circulating speed
- v₂: Circulating speed

## Claims

1. Isolating, plant (2) for isolating nuclear fuel pellets (6) fed in stacks, having a feeding device (10) and having an output device (26),
wherein in a delivery area (38) situated between the feeding device (10) and the output device (26), a separating device (24) driven by a pressure gas is arranged,
wherein
the separating device (24) comprises a conveying tube (42) through which the nuclear fuel pellets (6) to be isolated are passed along a conveying direction (12) during operation of the plant, and includes a number of pressure-gas distribution slots (54) formed into the tube wall (52) and connected to a pressure-gas line (58),
wherein the separating device (24) is connected through the pressure-gas line (58) to a pressure-gas source, a valve (62) synchronized by means of synchronization means with the movement of the nuclear fuel pellets (6) on the feeding device (10) being arranged in the pressure-gas line (58),
the valve (62) being a high-speed solenoid valve which is configured to realize pressure-gas pulses of a duration in the range between 1 ms and 50 ms,
so that in the separating device (24) the fed nuclear fuel pellets (6) are accelerated in conveying direction (12) and thus are separated from each other during operation of the plant by pressure-gas pulses, and that the nuclear fuel pellets (6) are delivered one by one to the output device (26).

2. Isolating plant (2) according to claim 1, the pressure-gas distribution slots (54) being arranged in an end zone of the conveying tube (42), said end zone facing the output device (26).

3. Isolating plant (2) according to any of claims 1 to 2, the pressure-gas distribution slots (54) being arranged and dimensioned such that the applied pressure-gas pulses always accelerate, in conveying direction (12), only the frontmost nuclear fuel pellet (6) in conveying direction (12) of a fed stack, thus separating it from the stack.

4. Isolating plant (2) according to any of claims 1 to 3, the synchronization means comprising a light barrier (64) whose light path is interrupted during operation of the plant by the nuclear fuel pellets (6) coming out of the conveying tube (42) on the output side.

5. Isolating plant (2) according to any of claims 1 to 4, the feeding device (10) comprising a feeding conveyor belt and the output device (26) comprising an output conveyor belt (26).

6. Isolating plant (2) according to claim 5, the output conveyor belt (26) including a plurality of pushing pins (30) arranged at regular spacings from each other, between which the isolated nuclear fuel pellets (6) are placed during operation of the plant.

7. Isolating plant (2) according to claim 6, the synchronization means comprising a position detector detecting the instantaneous position of the pushing pins (30).

8. Method for isolating nuclear fuel pellets (6), fed in stacks by a feeding device (10), wherein a stack of nuclear fuel pellets (6) is pushed along a conveying direction (12) through a conveying tube (42) including a number of pressure-gas distribution slots (54) connected to a pressure-gas line (58) and formed into the tube wall (52), individual nuclear fuel pellets (6) being accelerated along the conveying direction (12) and thus separated from the stack by charging the pressure-gas distribution slots (54) with pressure-gas pulses with a duration in the range between 1 ms and 50 ms, and the separated nuclear fuel (6) pellets being delivered one by one to an output device (26).

9. Method according to claim 8, wherein the fed stack is continuously pushed into the conveying tube (42) and wherein the pressure-gas pulses are applied at least approximately at periodic time intervals, so that a quasi-continuous isolation of the nuclear fuel pellets (6) is effected.

## Patentansprüche

1. Vereinzelungsanlage (2) zur Vereinzelung von in Stapeln zugeführten Kernbrennstoff-Pellets (6) mit einer Zufuhrvorrichtung (10) und einer Ausgabevorrichtung (26), bei der eine durch ein Druckgas angetriebene Trennvorrichtung (24) in einem zwischen der Zufuhrvorrichtung (10) und der Ausgabevorrichtung (26) befindlichen Übergabebereich (38) angeordnet ist,
bei der die Trennvorrichtung (24) ein Förderrohr (42), durch das die zu vereinzelnden Kernbrennstoff-Pellets (6) im Betrieb der Anlage in einer Förderrichtung (12) geführt werden, umfasst und eine Anzahl von in die Rohrwand (52) eingeformten und mit einer Druckgasleitung (58) verbundenen Druckgasverteilschlitze (54) aufweist,
bei der die Trennvorrichtung (24) über die Druckgasleitung (58) mit einer Druckgasquelle verbunden ist, wobei ein mit Hilfe von Synchronisierungsmitteln mit der Bewegung der Kernbrennstoff-Pellets (6) auf der Zufuhrvorrichtung (10) synchronisiertes Ventil (62) in der Druckgasleitung (58) angeordnet ist, wobei das Ventil (62) ein Hochgeschwindigkeits-Magnetventil ist, das dafür konfiguriert ist, Druckgasimpulse von einer Dauer im Bereich zwischen 1 ms und 50 ms zu geben,
so dass in der Trennvorrichtung (24) die zugeführten Kernbrennstoff-Pellets (6) in Förderrichtung (12) beschleunigt werden und somit im Betrieb der Anlage durch Druckgasimpulse voneinander getrennt werden und die Kernbrennstoff-Pellets (6) einzeln an die Ausgabevorrichtung (26) übergeben werden.

2. Vereinzelungsanlage (2) gemäß Anspruch 1, wobei die Druckgasverteilschlitze (54) in einem Endbereich des Förderrohrs (42) angeordnet sind und dieser Endbereich der Ausgabevorrichtung (26) zugewandt ist.

3. Vereinzelungsanlage (2) gemäß einem der Ansprüche 1 bis 2, wobei die Druckgasverteilschlitze (54) so angeordnet und dimensioniert sind, dass die gegebenen Druckgasimpulse, in Förderrichtung (12) gesehen, immer nur das vorderste Kernbrennstoff-Pellet (6) in Förderrichtung (12) eines zugeführten Stapels beschleunigen und es dadurch vom Stapel trennen.

4. Vereinzelungsanlage (2) gemäß einem der Ansprüche 1 bis 3, wobei die Synchronisierungsmittel eine Lichtschranke (64) umfassen, deren Lichtpfad im Betrieb der Anlage durch die auf der Ausgabeseite aus dem Förderrohr (42) heraus kommenden Kernbrennstoff-Pellets (6) unterbrochen wird.

5. Vereinzelungsanlage (2) gemäß einem der Ansprüche 1 bis 4, wobei die Zufuhrvorrichtung (10) ein Zufuhrförderband umfasst und die Ausgabevorrichtung (26) ein Ausgabeförderband (26) umfasst.

6. Vereinzelungsanlage (2) gemäß Anspruch 5, wobei das Ausgabeförderband (26) eine Mehrzahl von in regelmäßigen Abständen voneinander angeordneten Schiebezapfen (30) aufweist, zwischen die die vereinzelten Kernbrennstoff-Pellets (6) im Betrieb der Anlage platziert werden.

7. Vereinzelungsanlage (2) gemäß Anspruch 6, wobei die Synchronisierungsmittel einen Positionsmelder, der die momentane Position der Schiebezapfen (30) erfasst, aufweisen.

8. Verfahren zur Vereinzelung von von einer Zufuhrvorrichtung (10) in Stapeln zugeführten Kernbrennstoff-Pellets (6), bei dem ein Stapel von Kernbrennstoff-Pellets (6) in einer Förderrichtung (12) durch ein Förderrohr (42), das eine Anzahl von mit einer Druckgasleitung (58) verbundenen und in die Rohrwand (52) eingeformten Druckgasverteilschlitze (54) aufweist, geschoben wird, wobei einzelne Kernbrennstoff-Pellets (6) in Förderrichtung (12) beschleunigt werden und somit durch Beaufschlagung der Druckgasverteilschlitze (54) mit Druckgasimpulsen von einer Dauer im Bereich zwischen 1 ms und 50 ms vom Stapel getrennt werden und die getrennten Kernbrennstoff-Pellets (6) einzeln an die Ausgabevorrichtung (26) übergeben werden.

9. Verfahren gemäß Anspruch 8, bei dem der zugeführte Stapel kontinuierlich in das Förderrohr (42) eingeschoben wird und bei dem die Druckgasimpulse zumindest annähernd in periodischen Zeitintervallen gegeben werden, so dass eine quasi-kontinuierliche Vereinzelung der Kernbrennstoff-Pellets (6) erfolgt.

## Revendications

1. Installation d'isolement (2) pour isoler des pastilles de combustible nucléaire (6) alimentées sous forme de piles, ayant un dispositif d'alimentation (10) et un dispositif de sortie (26),
dans laquelle un dispositif de séparation (24) entraîné par un gaz sous pression est agencé dans une zone de distribution (38) qui se trouve entre le dispositif d'alimentation (10) et le dispositif de sortie (26),
dans laquelle le dispositif de séparation (24) comprend un tube de transport (42) à travers lequel les pastilles de combustible nucléaire (6) à isoler sont passées dans une direction d'alimentation (12) pendant le fonctionnement de l'installation et comprend un nombre de fentes de distribution de gaz sous pression (54) formées dans la paroi du tube (52) et reliées avec une conduite de gaz sous pression (58), dans laquelle le dispositif de séparation (24) est relié, par la conduite de gaz sous pression (58), avec une source de gaz sous pression, une vanne (62), synchronisée à l'aide de moyens de synchronisation avec le mouvement des pastilles de combustible nucléaire (6) se trouvant sur le dispositif d'alimentation (10), étant agencée dans la conduite de gaz sous pression (58), dite vanne (62) étant une électrovanne à haute vitesse qui est configurée pour appliquer des impulsions de gaz sous pression d'une durée dans la gamme entre 1 ms et 50 ms,
de manière que les pastilles de combustible nucléaire (6) alimentées sont accélérées dans le dispositif de séparation (24) dans la direction d'alimentation (12) et sont de ce fait séparées les unes des autres pendant le fonctionnement de l'installation par des impulsions de gaz sous pression et que les pastilles de combustible nucléaire (6) sont délivrées une à une au dispositif de sortie (26).

2. Installation d'isolement (2) selon la revendication 1, les fentes de distribution de gaz sous pression (54) étant agencées dans une zone finale du tube de transport (42) et cette zone finale étant en regard du dispositif de sortie (26).

3. Installation d'isolement (2) selon l'une quelconque des revendications 1 à 2, les fentes de distribution de gaz sous pression (54) étant agencées et dimensionnées de façon que les impulsions de gaz sous pression appliquées, vu dans la direction d'alimentation (12), n'accélère toujours que la première pastille de combustible nucléaire (6) dans la direction d'alimentation (12) d'une pile alimentée, en la séparant de la pile.

4. Installation d'isolement (2) selon l'une quelconque des revendications 1 à 3, les moyens de synchronisation comprenant une barrière lumineuse (64) dont le chemin de lumière est interrompu pendant le fonctionnement de l'installation par les pastilles de combustible nucléaire (6) sortant du côté de sortie, du tube de transport (42).

5. Installation d'isolement (2) selon l'une quelconque des revendications 1 à 4, le dispositif d'alimentation (10) comprenant un transporteur à bande d'alimentation et le dispositif de sortie (26) comprenant un transporteur à bande de sortie (26).

6. Installation d'isolement (2) selon la revendication 5, le transporteur à bande de sortie (26) comprenant une pluralité de tenons pousseurs (30) agencés à des intervalles réguliers l'un de l'autre, entre lesquels les pastilles de combustible nucléaire (6) isolées sont positionnées pendant le fonctionnement de l'installation.

7. Installation d'isolement (2) selon la revendication 6, les moyens de synchronisation comprenant un détecteur de position qui détecte la position instantanée du tenon pousseur (30).

8. Procédé pour isoler des pastilles de combustible nucléaire (6) alimentées sous forme de piles par un dispositif d'alimentation (10), dans lequel une pile von pastilles de combustible nucléaire (6) est poussée dans une direction d'alimentation (12) à travers un tube de transport (42) comprenant un nombre de fentes de distribution de gaz sous pression (54) reliées avec une conduite de gaz sous pression (58) et formées dans la paroi du tube (52), des pastilles de combustible nucléaire (6) individuelles étant accélérées dans la direction d'alimentation (12) et étant de ce fait séparées de la pile, en chargeant les fentes de distribution de gaz sous pression (54) avec des impulsions de gaz sous pression d'une durée dans la gamme entre 1 ms et 50 ms, et les pastilles de combustible nucléaire (6) séparées étant délivrées une à une au dispositif de sortie (26).

9. Procédé selon la revendication 8, dans lequel la pile alimentée est poussée d'une façon continue dans le tube de transport (42) et dans lequel les impulsions de gaz sous pression sont appliquées, au moins approximativement, à des intervalles de temps périodiques, de manière qu'un isolement quasi-continu des pastilles de combustible nucléaire (6) est effectué.
